# EUROPEAN PATENT APPLICATION

(11) **EP 2 256 893 A1**
(43) Date of publication of application: **01.12.2010**
(21) Application number: 09711122.3
(22) Date of filing: 16.02.2009
(51) Int. Cl.: H02J 3/18

(54) **SERIES VOLTAGE COMPENSATOR AND METHOD FOR SERIES VOLTAGE COMPENSATION IN ELECTRICAL GENERATORS**

(30) Priority: 15.02.2008 WO PCT/ES2008/070025
(71) Applicant: Wind To Power System, S.l., 28108 Madrid (ES)
(72) Inventor: ARNALTES GÓMEZ, Santiago, E-28108 Alcobendas - Madrid (ES); CORCELLES PEREIRA, José Manuel, E-28108 Alcobendas - Madrid (ES); RODRÍGUEZ AMENEDO, José Luis, E-28108 Alcobendas - Madrid (ES); SANTOS MARTÍN, David, E-28108 Alcobendas - Madrid (ES)
(74) Representative: ABG Patentes, S.L.
(86) International application number: PCT/ES2009/070028
(87) International publication number: WO 2009/101234

(57) **Abstract**

Series voltage compensator connected in series between an electrical generator and an electrical grid that comprises a filter and an electronic power converter per phase. The compensator generates a voltage to dynamically compensate for sudden voltage drops in the electrical grid, with it being additionally possible to control the angle of the voltage in relation to the current with the aim of controlling the reactive power injected (or absorbed) by the series voltage compensator to the grid.

## Description

### Technical field

The present invention refers to a device and method for series voltage compensation of a grid. The device and method of the invention is of special application to electrical generators, particularly to generators used in wind turbines.

### Background of the Invention

Currently, electrical generators coupled to turbines, such as for example wind turbines, are known in the state of the art to be connected to the electrical grid through step-up voltage transformers. This configuration of turbine connected to an electrical generator is used to produce electrical power that is injected into an electrical distribution grid.

Usually, to generate electrical power using a wind turbine, asynchronous generators are preferred over synchronous generators for various reasons. There are two types of asynchronous generator preferably used in wind turbines: squirrel-cage generators and wound-rotor generators.

Asynchronous squirrel-cage generators have the advantage of being very reliable, robust, have high power-weight ratio and high transitory overcharge resilience, so for these reasons were preferentially used in the first wind turbines.

However, asynchronous squirrel-cage generators connected to a wind turbine present the characteristic of functioning with a quasi-constant speed, which is a serious operational drawback.

One way of smoothing the mechanical characteristics of the generator is the insertion of resistances in the electrical circuit of the rotor, so that the generator no longer operates with short-circuited rotor, thereby increasing the smoothness the generator. This technique requires that the electrical circuit of the rotor be accessible, for which reason an asynchronous generator configuration called wound-rotor is used. This consists of winding the three phases of the rotor electrical circuit and leaving the terminals of each phase accessible.

However, asynchronous generators with short-circuited rotor or with the insertion of rotor resistances require a contribution of reactive power to generate the magnetic field required for electromechanical conversion of power. This is a serious drawback as electrical generators are required to have adjustable reactive capacity to deliver the complementary service of voltage control in electrical grids.

This drawback can be reduced in asynchronous wound-rotor generators by the connection of a voltage source to the generator rotor. This asynchronous generator configuration is called doubly-fed asynchronous generator. An electrical inverter is used as a source of power to the rotor that enables continuous adjustment of the magnitude, frequency and phase angle of the voltage applied to the asynchronous generator rotor. It is possible to control the electrical variables of the generator, such as the active and reactive power fed to the grid by means of adjustment of this voltage applied to the rotor.

However, asynchronous generators, either with short-circuited rotor, with rotor resistances, or doubly-fed are disconnected from the grid for various reasons by their protection circuits when there are sudden drops in grid voltage.

When a sudden drop of the grid voltage occurs, called a voltage dip, produced for example by a correctly cleared short circuit at a point in the grid close to the generator, the generator protective circuits react immediately by disconnecting the generator from the electrical grid. If the minimum voltage protection were delayed, the fall in voltage would give rise to a reduction of the resistance torque of the generator, causing an increase in rotation speed and then the disconnection of the generator and stopping of the turbine by the over speed protection trip to prevent structural damage. In the moments after the fault is cleared, the voltage in the generator starts to recover and in this situation, the generator demands additional reactive power making the process of recovering voltage more difficult. Therefore, during recovery of voltage, the electrical grid requires the provision of reactive current to help restore the voltage to its nominal value. Voltage drops due to unbalanced faults also produce inverse sequence currents that give rise to excessive heating of the machine's coils and an oscillation of the electromagnetic torque of double the source frequency. The same happens in a continuous mode unbalanced voltage system.

To compensate the reactive power demand required to magnetise the generator, compensation by the connection of batteries of capacitors in parallel with the generator is described in the state of the art. This system is widely used but presents the drawback of being a system where the compensation capacity depends on the voltage. Therefore after important voltage drops, such as those caused by faults, its capacity is seriously diminished. There are also devices based on static switches connected in parallel to the generator, such as the case of STATCOM (STATic COMpensator) that enables dynamic compensation of reactive current.

However, these solutions based on devices connected in parallel with the generator are not adequate to compensate significant voltage drops caused by electrical faults. In this sense, devices connected in series with the generator are more advisable.

Compensation systems connected in series are more effective in the case of significant voltage dips on the grid, as the voltage that these devices feed into the grid is added to the residual voltage of the grid during the fault, so that the resulting voltage in the generator remains nominal.

There is a type of serially connected device known in the state of the art as dynamic voltage restorer (DVR), comprising an electronic voltage converter connected to the secondary of a transformer, whose primary is connected in series to the electrical grid. These transformers are called insertion transformers.

To compensate for voltage dips in electrical loads, this device must additionally have a system of energy storage to provide additional energy to the load during the voltage dip. In order to compensate for voltage dips in a generator, the device can only have one energy dissipation system, which is often a set of resistances. The drawback in this compensation system, connected in series by a transformer, is the losses produced in the transformer and the consequent reduction in global performance of the generation system. Also, the inclusion of a transformer in dynamic voltage restorers gives rise to significant drops in voltage, problems associated with saturation of the magnetic material, more complex protection systems for the device and in general result in very bulky and heavy equipment. They may even be unsuitable for installing in aerogenerators in their rehabilitation phase, that is, in already installed and operating aerogenerators. In these types of aerogenerators, the dimensions of the tower on which they are located mean that the installation of a transformer of such volume and weight as indicated above, is in many cases not possible.

Therefore, it is necessary to develop a series compensation system without a transformer for a generator that can be connected to a turbine generating and supplying electrical power to a distribution grid that is capable of:
a) controlling the feed voltage of the generator independently of variations in voltage in the grid,
b) dynamically controlling the reactive power exchanged with the electrical grid,
c) reducing the losses caused by the passage of current through the compensation system, in comparison with currently existing devices,
d) preventing the appearance of inverse sequence voltage components in the generator,
e) preventing sudden changes in the electromagnetic torque as a consequence of changes in voltage, thereby preventing high mechanical forces in the components, and
f) having a smaller volume and weight.

The international application number WO2008/081049 describes a parallel-series compensation system, which integrated with the generator, represents a generation system capable of meeting the functional requirements listed above. However, this system suffers from the previously mentioned drawback of requiring a transformer, whose primary is connected in series between the generator and the grid to inject the inverter voltage to the electrical grid.

### SUMMARY OF THE INVENTION

This and other objects of the invention are achieved by means of a compensator in accordance with claim 1, a method in accordance with claim 12, a computer program in accordance with claim 15 and a computer readable medium according to claim 17. The particular embodiments of the invention are defined in the dependent claims.

With the aim of solving the technical problems mentioned above as well as others that will be listed later when the advantages of the present invention are described, the present invention provides, in a first inventive aspect, a series voltage compensator for electrical generators comprising:
filter means connected in series between each one of the generator phases and each one of the phases of the electrical power distribution grid, and
electronic power converter means connected to and feeding the filter means.

The electrical generator, whatever its nature and typology, is connected to a turbine, such as for example a wind turbine.

The compensator of the invention avoids the need for parallel compensation means, adapting the series compensator to function as a series reactive compensator, being able to perform the reactive compensation function by injecting a voltage in quadrature to the generator current.

Of special importance is the absence of an insertion transformer in the compensator of the invention, that is, of a series transformer between the electrical generator and the distribution grid. The compensator of the invention is capable of compensating the voltage in the generator and at the same time compensating the reactive power.

Specifically, in the compensator of the invention, each generator phase is connected in series to a phase of the electrical power grid through the output terminals of a filter, to whose input terminals are connected to a single-phase inverter to carry out the control of the voltage applied to each generator phase, each single-phase inverter having an independent continuous current stage.

This configuration provides the required galvanic insulation between the electrical system phases, formed by the generator, the series voltage compensator and the grid.

Also, the compensator of the invention guarantees the power supply by the electrical generator when voltage variations occur in the electrical grid, both in balanced and in unbalanced mode, thereby contributing to the electrical grid stability, providing the required reactive power.

The compensator of the invention enables the voltage applied to the generator to be substantially three-phase and balanced independently of the voltage variations and existing unbalances in the electrical grid.

Also, the compensator of the invention reduces sudden variations of electromagnetic torque caused as a result of changes in electrical grid voltage, so reducing the mechanical loads on the aerogenerator transmission system.

The present invention presents, in a second inventive aspect, a method for series voltage compensation in electrical generators that comprise the stages of:
providing a series voltage compensator according to the first inventive aspect, and
interconnecting the filter means of said series voltage compensator in series between each of the electrical generator phases and each of the electrical power distribution grid phases in such a way that the series voltage compensator generates the complementary voltage, which summed to the grid voltage, maintains the nominal voltage of the electrical generator.

A third aspect of the invention concerns a computer program, comprising program code means to effect the series voltage compensation method in electrical generators according to the second aspect of the invention, when said program is executed on a computer.

In one embodiment, the computer program is copied to a computer readable medium.

A fourth aspect of the invention concerns a computer readable medium containing a computer program comprising program code means to effect the series voltage compensation method in electrical generators according to the second aspect of the invention when said program is executed on a computer.

### BRIEF DESCRIPTION OF THE FIGURES

To complement the description and with the aim of improving understanding of the invention's characteristics and of a preferred example of its embodiment, a set of figures is provided as an integral part of this description where, for illustration purposes and without limiting the invention, the following have been represented:
Figure 1 shows a block diagram of the series voltage compensator of the invention.
Figure 2 shows a single-phase electronic converter of the invention.
Figure 3 shows a vector diagram of voltages and current of the system explaining the series voltage compensation of the invention when there is a sudden voltage drop in the grid.
Figure 4 shows a vector diagram of voltages and current of the system explaining the series reactive compensation of the invention.

### DESCRIPTION OF A PREFERRED EMBODIMENT

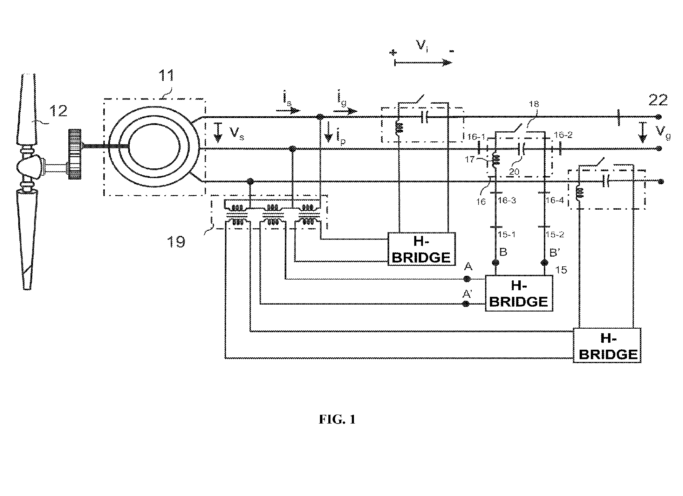

Below, referring to Figure 1, the block diagram schema of a series voltage compensator that has the means required to compensate the voltage in a generator against sudden drops in grid voltage.

The generator (11) is coupled mechanically to a turbine (12), such as a wind turbine.

The series voltage compensator comprises a filter (16) and an electronic power converter (15) per phase. The series voltage compensator is connected in series between the generator (11) and the electrical grid (22).

For each phase, a first terminal (16-1) of the filter is connected to the corresponding phase of the generator (11) and a second terminal (16-2) of the filter is connected to the corresponding phase of the electrical grid.

A shunt element (18), such as a switch, is connected between the first (16-1) and second terminal (16-2) of the filter (16).

The filter is a quadrupole where the input terminals (16-3) and (16-4) are connected to the output terminals (15-1) and (15-2) of an electronic power converter (15).

Figure 1 shows a particular embodiment of the filter, comprising a series-parallel association of a coil (17) and a capacitor (20), representing a low pass filter, with the aim of attenuating the high frequency harmonics produced by the electronic power converter.

In a particular embodiment, the series voltage compensator comprises a transformer (19) connected to the electrical grid on the side of the generator (11) to feed each of the direct stages of the electronic power converter means (16) independently by means of single-phase rectifier means (23).

Specifically, the three phases of the generator (11) are connected to the three terminals of the primary coil of the three-phase transformer (19), where each of the three phases of the secondary coil are connected to the input terminals (A-A') of each of the electronic power converters (15).

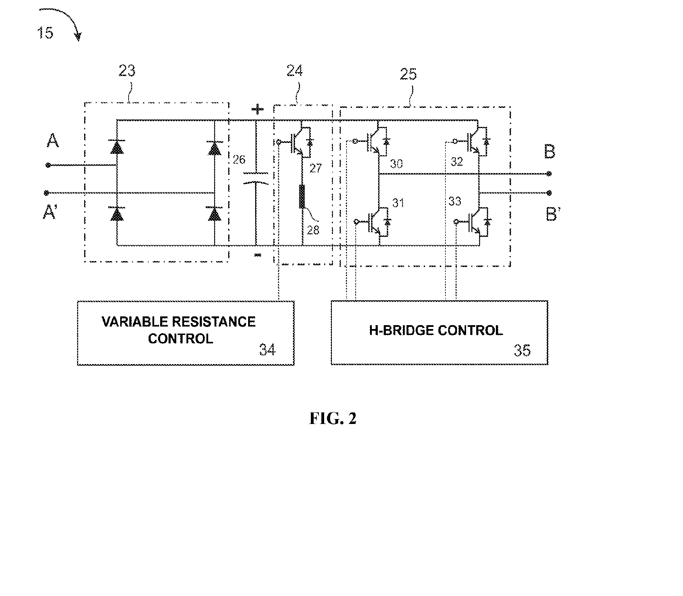

Referring to Figure 2, the electronic power converter (15) comprises of a stage of direct current, including a capacitor (26), whose function is to maintain the voltage of the direct current at the inverter input. In turn, the function of the transformer (19) is to set the voltage of the capacitor (26), although this can also be achieved by other means, such as for example the compensator control electronics.

Also, the terminals (A-A') of the electronic power converter (15) are connected to the input of a rectifier bridge (23), whose function is to set the voltage of the direct current stage where the capacitor (26) is located.

To limit sudden changes in voltage in the direct current stage, there is a limiter device (24) comprising a fixed resistance (28) connected in series to a first switching element (27), which has a control terminal through which the first control module (34) generates and supplies a switch on and/or switch off signal by means of a first control algorithm stored in the first controller (34).

The direct current stage is also connected to a single-phase inverter (25), comprising an assembly of switching components arranged in two branches. The first of these comprises second and third switching components (30) and (31) and the second branch comprises fourth and fifth switching components (32) and (33).

The first output terminal (15-1) of the electronic power converter (15) is connected between the second and third switching components (30) and (31). The second output terminal (15-2) of the electronic power converter (15) is connected between the switching components (32) and (33).

Each switching element of the single-phase inverter (25) comprises a control terminal through which a switch on/switch off signal is applied, generated and supplied by a second controller module (35), which stores and executes a second control algorithm.

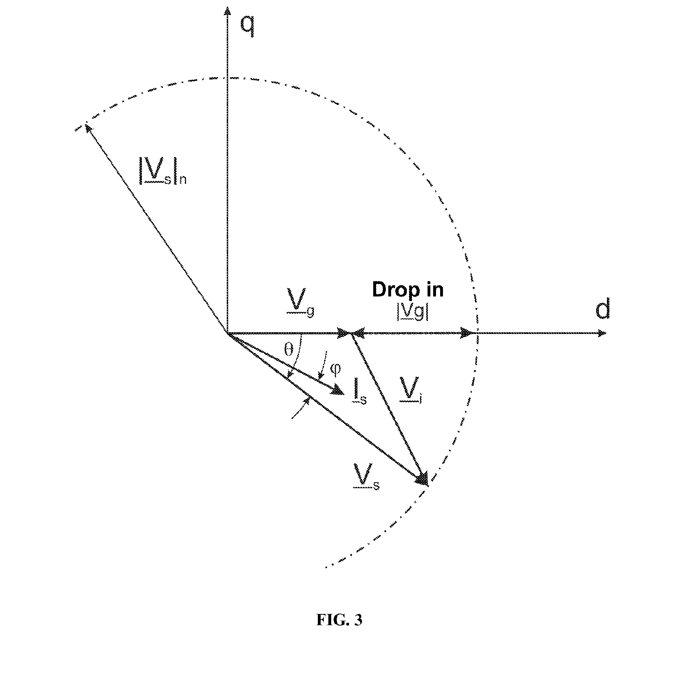

Referring to Figure 3, on the d-q axes linked to the voltage **V_{g}** of the grid (22), the following are shown: the vectors of the voltage **Vₛ** of the generator (11), voltage **Vg** of the grid (22), voltage **Vᵢ** at the output of the filter (16) and the current vector Iₛ, when there is a sudden fall in the voltage **V_{g}** of the grid (22). In such a case, the control module (35) detects this voltage drop and acts on the single-phase inverter (25), applying a voltage at the input of filter (16) that results in the voltage Vᵢ at the output of the filter in such a way that the voltage Vₛ does not change from its nominal value. Also, the voltage Vᵢ can be set in such a way as to control the angle □ formed by the voltage vector Vₛ of the generator (11) and the voltage vector V_{g} of the grid (22) so that in this way the reactive current injected into the electrical power distribution grid (22) can be controlled.

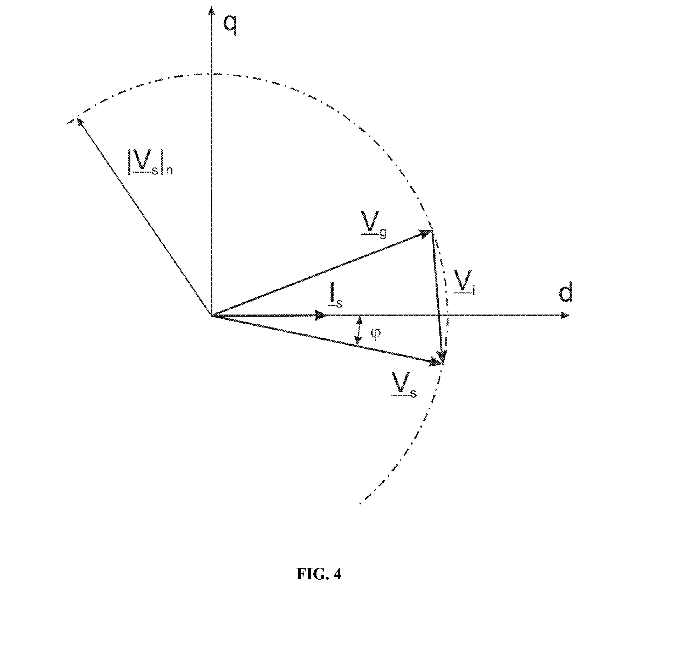

Referring to Figure 4, on the d-q axes linked to the stator current vector **Iₛ**, the following are shown: the vectors of the voltage **Vₛ** of the generator (11), voltage **V_{g}** of the grid (22), voltage **Vᵢ** at the output of the filter (16) and the current **Iₛ**, with the aim of describing how control of injected reactive (or absorbed) power is achieved by the series compensator in the grid (22). The control module (35) acts on the single-phase inverter (25) applying a voltage at the input of the filter (16) that results in the voltage Vᵢ at the output of the filter in such a way that the voltage V_{g} forms a specific angle ϕ with the stator current vector Iₛ.

It should be observed that the present invention can be implemented in a variety of computers comprising microprocessors, computer readable medium, including volatile and non-volatile memory components and/or storage components. The logic of the computational hardware that cooperates with various sets of instructions is applied to the data to perform the functions described above and to generate the output information. The programs used by the computational hardware for example can be implemented in various programming languages, including a high level procedure or object orientated programming language, to communicate with the computer system. Each computer program is preferably stored on a storage medium or device (for example, ROM or magnetic disk) that is readable by a general purpose or specific programmable computer, to configure and operate the computer when the storage medium or device is read by the computer with the aim of executing the procedures described above. Also it can be considered that the first and second controller be implemented as a computer readable storage medium, configured with a computer program, where the storage medium so configured causes the computer to operate in a specific and predefined way.

The embodiments and examples established in this report are presented as the best explanation of the present invention and its practical application and to enable experts in the field to use the invention. However, experts in the field will recognise that the description and the examples above were presented for the purpose of illustrating only one example. The description is not intended to be exhaustive or to limit the invention to the specific way it was described. Many modifications and variations are possible in the light of the description above without deviating from the spirit and scope of the following claims.

## Claims

1. Series voltage compensator for electrical generators, particularly aerogenerators, comprising:
Filter means (16) connected in series between each one of the phases of the generator (11) and each one of the phases of the electrical power distribution network (22), and
electronic power converter means (15) connected to and feeding the filter means (16).

2. Series voltage compensator according to claim 1, **characterised in that** the filter means (16) are a LC low pass filter comprising a capacitor (20) and a coil (17).

3. Series voltage compensator according to claim 1, **characterised in that** the electronic power converter means (15) are an H-bridge single-phase inverter per phase.

4. Series voltage compensator according to any of the previous claims, **characterised in that** the filter means (16) comprise input terminals (16-3, 16-4) connected to output terminals (15-1, 15-2) of the electronic power converter means (15).

5. Series voltage compensator according to claims 1 or 3, **characterised in that** the electronic power converter means (15) comprise:
single-phase rectifier means (23),
limiter means (24) to prevent sudden changes in voltage in the direct stage connected to the rectifier means (23), and
single-phase inverter means (25) connected to the limiter means (24).

6. Series voltage compensator according to any of the claims above, **characterised in that** it comprises a transformer (19) connected to the electrical grid on the side of the generator (11) to feed each of the direct stages of the electronic power converter means (15) independently by means of single-phase rectifier means (23).

7. Series voltage compensator according to claim 5, **characterised in that** the electronic power converter means (15) comprise a direct stage with a capacitor (26) that is charged and maintains the voltage of the direct stage at a fixed value.

8. Series voltage compensator according to claim 5, **characterised in that** the limiter means (24) comprise a resistance (28) and a switching component (27) controlled by means of a first controller (34) that applies a switch on and/or switch off signal to said switching component (27) to control the voltage changes in the direct current stage.

9. Series voltage compensator according to claim 5, **characterised in that** the single-phase inverter means (25) comprise two branches, the first comprising second and third switching components (30, 31) and the second comprising fourth and fifth switching components (32, 33), and whose points (B, B') feed the filter means (16).

10. Series voltage compensator according to claim 9, **characterised in that** a second controller (35) generates switch on and/or switch off signals to some switching components (30, 31, 32 and 33) of each of the single-phase inverters (25) to control the voltage applied to the filter means (16) connected in series between the generator (14) and the electrical power distribution grid (22).

11. Series voltage compensator according to any of the previous claims, **characterised in that** the generator (11) is connected to a turbine (12).

12. Method for series voltage compensation in electrical generators, **characterised in that** it comprises the following stages:
providing a series voltage compensator according to at least one of the claims 1 to 11, and
interconnecting the filter means (16) of said series voltage compensator in series between each of the phases of the generator (11) and each of the phases of the electrical power distribution grid (22) in such a way that the series voltage compensator generates the voltage Vᵢ, which summed to the grid voltage V_{g}, maintains the voltage Vₛ of the electrical generator at a pre-established value.

13. Method for series voltage compensation in electrical generators according to claim 12, **characterised in that** it comprises the stage of limiting the voltage of the capacitor (26) of the direct current stage by means of the application of switch on and/or switch off pulses of the first switching component (27) of the limiter means (24).

14. Method for series voltage compensation in electrical generators according to claim 12, **characterised in that** it additionally comprises the stage of regulating the voltage of the generator (11) in relation to the voltage of the distribution grid (22) so that the angle between the voltage of the grid V_{g} and the current of the generator Iₛ are regulated, resulting in a regulation of the reactive power.

15. Computer program, **characterised in that** it comprises program code means to effect the method for series voltage compensation in electrical generators according to any of claims 12, 13 or 14, when said program is executed on a computer.

16. Computer program according to claim 15, **characterised in that** it is copied to a computer readable medium.

17. Computer readable medium, **characterised in that** it contains computer code means comprising program code to effect the method for series voltage compensation in electrical generators according to any of claims 12, 13 or 14, when said program is executed on a computer.
